# EUROPÄISCHE PATENTSCHRIFT

(11) **EP 0 525 835 B1**
(45) Veröffentlichungstag und Bekanntmachung des Hinweises auf die Patenterteilung: **05.04.1995**
(21) Anmeldenummer: 92118136.8
(22) Anmeldetag: 21.06.1990
(51) Int. Cl.: C02F 1/48

(54) **Vorrichtung zur Beseitigung von Kesselstein bzw. zur Verhütung der Bildung von Kesselstein**
Scale removal and prevention device
Dispositif pour l'élimination et la prévention de la formation du tartre

(30) Priorität: 04.07.1989 DE 3921860
(43) Veröffentlichungstag der Anmeldung: 03.02.1993
(62) Teilanmeldung aus: 90111714.3
(73) Patentinhaber: Schulze, Elfriede, D-95111 Rehau (DE); Rudolph, Eberhard, D-90518 Altdorf (DE)
(72) Erfinder: Schulze, Elfriede, D-95111 Rehau (DE); Rudolph, Eberhard, D-90518 Altdorf (DE)
(74) Vertreter: Graf, Helmut, Dipl.-Ing.

(56) Entgegenhaltungen:
- EP-A- 0 190 545
- WO-A-84/04294
- WO-A-88/09773
- DE-A- 3 629 288
- US-A- 2 596 743

## Beschreibung

Die Erfindung bezieht sich auf eine Vorrichtung gemäß Oberbegriff Patentanspruch 1.

Für die Behandlung von Wasser zum Verhüten der Bildung von Kesselstein oder Kalkablagerungen in wasserführenden Rohrsystemen sind bereits die unterschiedlichsten Vorrichtung bzw. Einrichtungen bekannt. Unter anderem sind auch Vorrichtungen bekannt, die eine Behandlung von stark kalk-und eisenhaltigem Wasser mittels magnetischer Felder vorsehen, wobei diese Geräte auf dem durch praktische Experimente bestätigten Effekt beruhen, daß die in einem kalk- und wasserhaltigen Wasser enthaltenen, zu Ablagerungen und damit auch zu Störungen bzw. Verstopfungen in einem wasserführenden System führenden Bestandteile beim Durchtritt des Wassers durch ein Magnetfeld in ihrer Wirkung derart "neutralisiert werden", daß Ablagerungen in dem wasserführenden System (an Rohren, Behältern, elektrischen Warm-Wasser-Erzeugern, Sanitär-Einrichtungen usw.) nicht mehr oder nur noch in einem sehr verminderten, die Funktionsfähigkeit dieses Systems nicht beeinträchtigendem Maße auftreten.

Bekannt ist insbesondere auch eine Vorrichtung (DE-OS 36 29 288), bei der der Innenraum des von zwei Gehäuseteilen gebildeten Gehäuses durch eine mit allseitigem Abstand von den Gehäuseteilen angeordnete Umlenkplatte in zwei Kammern unterteilt ist. Die beiden Kammern, von denen eine mit einer als Einlaß dienenden Anschlußöffnung des Gehäuses und die andere mit einer als Auslaß dienenden Anschlußöffnung des Gehäuses in Verbindung stehen, sind ebenso wie die kreisförmige Umlenkplatte kreissymmetrisch zu einer Symmetrieachse des Gehäuses ausgebildet. Diese Symmetrieachse wird konzentrisch von einer Magnetspule umschlossen, die ein Magnetfeld erzeugt, dessen Kraft-bzw. Feldlinien von dem das Gehäuse durchströmenden Wasser geschnitten werden. Am Umfang der Umlenkplatte sind die beiden Kammern miteinander verbunden.

Um zu vermeiden, daß der für die Erzeugung des Magnetfeldes notwendige Magnetspalt, der in einem von der Magnetspule umschlossenen Bereich zwischen den beiden Gehäuseteilen gebildet ist, durch die Anlagerung von eisenhaltigen Partikeln überbrückt bzw. für das Magnetfeld kurz geschlossen wird, wurde auch bereits schon vorgeschlagen, die Ansteuerung der Magnetspule mit einem sich in seiner Polarität ändernden Gleichstrom in der Form vorzunehmen, daß der Gleichstrom die Magnetspule in einem ersten Zeitintervall in der einen Richtung und in einem zweiten Zeitintervall in einer anderen, umgekehrten Richtung durchfließt, so daß evtl. sich in den einem Zeitintervall anlagernde eisenhaltige Partikel in dem zweiten Zeitintervall, d.h. nach dem Umschalten der Stromrichtung abgestoßen oder aber im Magnetfeld zumindest so bewegt werden, daß diese Partikel dann mit dem das Gehäuse durchströmenden Wasserstrom mitgeführt werden können.

Aufgabe der Erfindung ist es, eine Vorrichtung aufzuzeigen, die hinsichtlich der Ansteuerung der Magnetspule eine wesentliche Verbesserung der bekannten Vorrichtung darstellt.

Zur Lösung dieser Aufgabe ist eine Vorrichtung entsprechend dem kennzeichnenden Teil des Patentanspruches 1 ausgebildet.

Bei der Erfindung erfolgt die Ansteuerung der wenigstens einen Magnetspule derart, daß jeweils zwischen dem ersten und dem zweiten Zeitintervall und auch zwischen dem zweiten Zeitintervall und einem nachfolgenden ersten Zeitintervall ein drittes Zeitintervall vorgesehen ist, in welchem der Versorgungsstromkreis der wenigstens einen Magnetspule vollständig unterbrochen ist. Dies hat den Vorteil, daß das Umschalten der Stromrichtung bei von der Versorgungsspannung völlig abgeschalteter Magnetspule erfolgen kann. Dies bedeutet eine wesentliche Vereinfachung der auch das Umschalten der Stromrichtung bewirkenden Schalteinrichtung. Weiterhin hat dies vor allem auch den Vorteil, daß die in der Magnetspule vorhandene magnetische Energie zunächst abgebaut werden kann, bevor die Magnetspule mit dem Strom in umgekehrter Richtung beaufschlagt wird. Hierdurch werden vor allem auch hohe, sich zu der jeweiligen Versorgungsspannung addierende Rückschlagspannungen an der Magnetspule beim Umschalten von der einen Stromrichtung auf die andere Stromrichtung vermieden und damit auch evtl. Überspannungen an Bauteilen der Schalteinrichtung, die (Überspannungen) zu einer Zerstörung solcher Bauteile führen könnten.

Weiterbildungen der Erfindung sind Gegenstand der Unteransprüche.

Die Erfindung wird im folgenden anhand der Figuren an einem Ausführungsbeispiel näher erläutert. Es zeigen:
- Fig. 1: einen Längsschnitt durch eine Ausführungsform der erfindungsgemäßen Vorrichtung, bei der im Inneren des Gehäuses zwei Umlenkplatten, nämlich eine glatte und eine profilierte Platte aus ferromagnetischem Material angeordnet sind;
- Fig. 2: in vereinfachter Darstellung das Blockschaltbild der elektrischen Schaltung zur Ansteuerung der Magnetspule der Vorrichtung nach Fig. 1;
- Fig. 3: in vereinfachter Darstellung und im Blockdiagramm eine weitere Ausführungsform der Erfindung.
- Fig. 4: in vereinfachter Darstellung einen Schnitt durch eine Meßeinrichtung der Anordnung nach Fig. 3.

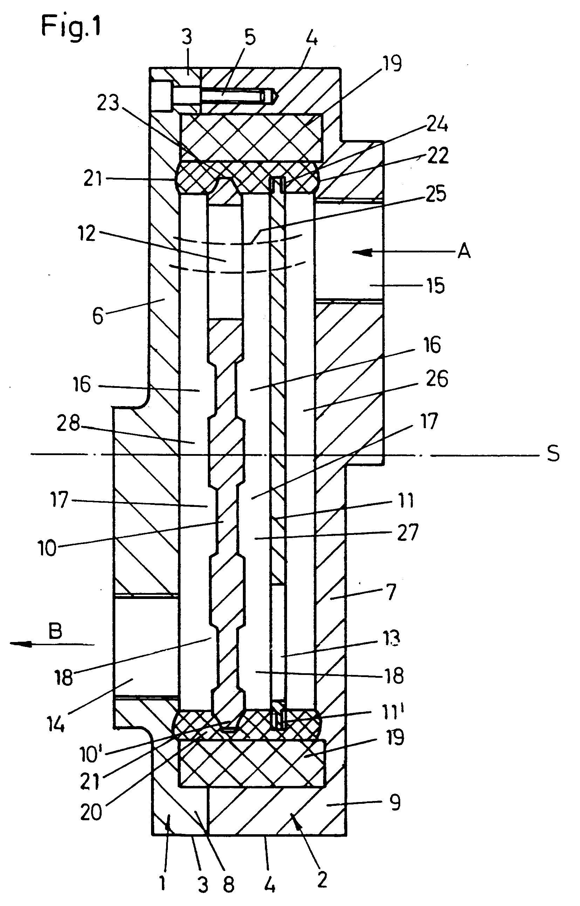

Die in den Figuren dargestellte Vorrichtung, die zur Behandlung von Wasser in einem Magnetfeld und damit zur Beseitigung von Kesselstein bzw. zur Verhütung der Bildung von Kesselstein in einem von Wasser durchströmten Rohrsystem dient, besteht bei der in der Fig. 1 dargestellten Ausführung aus zwei tellerartigen Gehäuseteilen 1 und 2, die jeweils eine kreiszylinderförmige, die Mittel- bzw. Symmetrieachse S der Gehäuseteile 1 und 2 konzentrisch umschließende Umfangsfläche 3 bzw. 4 aufweisen und durch mehrere, am Umfang vorgesehene Schrauben 5 zu dem Gehäuse der Vorrichtung miteinander verbunden sind.

An ihren einander zugewendeten Innenseiten sind die Gehäuseteile 1 und 2 schalen- bzw. tellerartig ausgebildet, d.h. die Gehäuseteile besitzen an dieser Seite an ihrem im wesentlichen kreisscheibenförmigen Gehäuseboden 6 bzw. 7 einen überstehenden ringförmigen Rand, und zwar das Gehäuseteil 1 an dem Gehäuseboden 6 den die Umfangsfläche 3 bildenden Rand 8 und das Gehäuseteil 2 an dem Gehäuseboden 7 den die Umfangsfläche 4 bildenden Rand 9, welch letzterer bei der dargestellten Ausführungsform in Richtung der Symmetrieachse S eine größere Höhe aufweist als der Rand 8, d.h. die von dem Rand 9 umschlossene schalenartige Ausnehmung des Gehäuseteiles 2 ist tiefer als die entsprechende, von dem Rand 8 des Gehäuseteiles 1 umschlossene Ausnehmung.

In dem von den Gehäuseteilen 1 und 2 umschlossenen Gehäuseinnenraum sind bei der dargestellten Ausführungsform zwei Umlenkplatten 10 und 11 angeordnet, die eine kreisförmige, die Symmetrieachse S umschließende Umfangsfläche aufweisen und mit ihrer Platten-Mittelebene jeweils senkrecht zu der Symmetrieachse S liegen. Die Umlenkplatte 10 besitzt gegenüber der Symmetrieachse S radial versetzt eine Durchlaßöffnung 12. Die Umlenkplatte 11 ist mit einer entsprechenden Durchlaßöffnung 13 versehen, die den gleichen Durchmesser wie die Durchlaßöffnung 12 aufweist und um den gleichen Betrag wie die Durchlaßöffnung 12 gegenüber der Symmetrieachse S radial versetzt ist. Die beiden Umlenkplatten 10 und 11 sind so in dem zwischen den Gehäuseteilen 1 und 2 gebildeten Gehäuseinnenraum angeordnet, daß die Durchlaßöffnungen 12 und 13 in bezug auf die Symmetrieachse S um 180^{o} gegeneinander versetzt sind. Den Durchlaßöffnungen 12 und 13 entsprechen Anschlußöffnungen 14 und 15, die bei der dargestellten Ausführungsform den gleichen Querschnitt wie die Durchlaßöffnungen 12 und 13 aufweisen und jeweils mit einem Innengewinde zum Anschluß an eine Rohrleitung versehen sind. Die in einem verstärkten Bereich des Gehäusebodens 7 des Gehäuseteiles 2 vorgesehene Anschlußöffnung 15 dient bei der dargestellten Ausführungsform als Einlaßöffnung zum Zuführen des zu behandelnden Wassers entsprechend dem Pfeil A. Die ebenfalls in einem verstärkten Teil des Gehäusebodens 6 des Gehäuseteiles 1 vorgesehene Anschlußöffnung 14 dient als Auslaßöffnung zum Abführen des behandelten Wassers. Die Anschlußöffnungen 14 und 15 sind so vorgesehen, daß die der Umlenkplatte 10 unmittelbar benachbart liegende Anschlußöffnung 14 in bezug auf die Symmetrieachse S um 180^{o} gegenüber der Durchlaßöffnung 12 und die der Umlenkplatte 11 unmittelbar benachbart liegende Anschlußöffnung 15 in bezug auf die Symmetrieachse S gegenüber der Durchlaßöffnung 13 um eine 180^{o} versetzt ist.

Die dem Gehäuseboden 7 unmittelbar benachbart angeordnete Umlenkplatte 11 ist an ihren beiden Oberflächenseiten als ebene Platte ausgebildet. Die dem Gehäuseboden 6 unmittelbar benachbart liegende Umlenkplatte 10 ist an ihren beiden Oberflächenseiten profiliert, d.h. die Umlenkplatte 11 ist an beiden Oberflächenseiten mit mehreren, zu der jeweiligen Oberflächenseite hin offenen nutenartigen Vertiefungen 16 -18 versehen, die sich jeweils über die gesamte Breite der Umlenkplatte 10 erstrecken, mit ihrer Längserstreckung parallel zueinander sowie jeweils senkrecht zu einer Mittellinie M10 der Umlenkplatte 10 liegen, die (Mittellinie) die Symmetrieachse S sowie die Achse der Durchlaßöffnung 12 schneidet. Im Bereich der nutenartigen Vertiefungen 16 - 18 kommt die an beiden Seiten der Umlenkplatte 10 einander unmittelbar gegenüberliegend vorgesehen sind, d.h. jeder Vertiefung 16, 17 bzw. 18 an der einen Seite der Umlenkplatte 16 ist eine entsprechende Vertiefung 16, 17 bzw. 18 an der anderen Seite der Umlenkplatte 10 unmittelbar benachbart, weist die Umlenkplatte 10 eine Dicke auf, die gleich der Dicke der Umlenkplatte 11 ist. Außerhalb der Vertiefungen 16, 17 ist die Dicke der Umlenkplatte 10 etwa doppelt so groß.

Die beiden Gehäuseteile 1 und 2, die an der den Umlenkplatten 10 bzw. 11 zugewendeten Innenflächen ihrer Gehäuseböden 6 bzw. 7 im wesentlichen eben bzw. plan ausgebildet sind, sowie die Umlenkplatten 10 und 11 sind aus einem ferromagnetischen, bevorzugt aus einem ferritischen Material, d.h. aus Eisenguß (z.B. GG25) hergestellt, wobei dieser Guß nach dem Gießen geglüht und anschließend bearbeitet wird. Dieses ferritische Material hat bei vertretbaren Herstellungskosten sowie bei der Möglichkeit einer Bearbeitung nach dem Gießen und Glühen und bei ausreichender mechanischer Festigkeit optimale magnetische Eigenschaften.

Die Umlenkplatten 10 und 11 sind konzentrisch von einer Magnetspule 19 umschlossen, die ebenfalls zwischen den beiden Gehäuseteilen 1 und 2 angeordnet ist und bei der dargestellten Ausführungsform einen Dichtungsring 20 umschließt, der mit seinen beiden stirnseitigen Ringflächen gegen die Innenflächen der Gehäuseboden 6 und 7 bzw. gegen dort ausgebildete, die Symmetrieachse konzentrisch umschließende, jeweils einen Sitz für den Dichtungsring 20 bildende Anlageflächen 21 bzw. 22 anliegt und damit den vom Wasser durchströmten Raum der Vorrichtung, in dem (Raum) auch die Umlenkplatten 10 und 11 angeordnet sind, von demjenigen Raum trennen, in welchem die Magnetspule 19 untergebracht ist. Der Dichtungsring 20 ist an seiner inneren Ringfläche profiliert, d.h. er weist dort zwei die Symmetrieachse S konzentrisch umschließende und in Richtung dieser Symmetrieachse gegeneinander versetzte Nuten 23 und 24, von denen die Nut 23 die Umlenkplatte 10 an ihrem hinsichtlich der Plattendicke verminderten Umfangsbereich 10' und die Nut 24 die Umlenkplatte 11 an ihrem in bezug auf die Plattendicke ebenfalls verminderten Umfangsbereich 11' aufnimmt. Der Dichtungsring 20 ist aus einem elastischen gummiartigen Material (z.B. unter Verwendung von synthetischem oder natürlichem Kautschuk) derart hergestellt, daß beim Festziehen der beiden Gehäuseteile 1 und 2 mittels der Schrauben 5 der hierbei elastisch verformte Dichtungsrand 20 nicht nur den vom Wasser durchströmten Innenraum des Gehäuses abschließt, sondern gleichzeitig auch gegen die Innenfläche der ringförmigen Magnetspule 19 und gegen die Bereich 10' sowie 11' der Umlenkplatten 10 und 11 anliegt, so daß sämtliche Teile fest miteinander verbunden sind und auch die Magnetspule 19 rüttelfest eingespannt ist. Das Material des Dichtungsringes 19 weist eine niedrige magnetische Leitfähigkeit auf, so daß sich zwischen jedem Gehäuseteil und der benachbarten Umlenkplatte sowie auch zwischen diesen Umlenkplatten bei von einem Strom durchflossene Magnetspule 19 ein ausreichend großes Magnetfeld ausbilden kann, wie dies in der Fig. 1 mit unterbrochenen Linien 25 angedeutet ist.

Anstelle eines Dichtungsrïnges 20 können auch mehrere einzelne Dichtungsringe verwendet sein, die dann nicht nur dicht gegen die Gehäuseteile 1 und 2, Umlenkplatten 10 und 11 sowie die Magnetspule 19, sondern dicht gegeneinander anliegen. Durch die Umlenkplatten 10 und 11 ist der Innenraum des von den Gehäuseteilen 1 und 2 gebildeten Gehäuses in drei Kammern 26, 27 und 28 unterteilt, die das Wasser jeweils nacheinander durchströmen muß, um von der Anschlußöffnung 15 an die Anschlußöffnung 14 zu gelangen, d.h. das Wasser tritt an der Anschlußöffnung 15 in die dortige Kammer 26 ein, verläßt diese Kammer dann an der Durchlaßöffnung 13, gelangt nach einer Umlenkung um 180^{o} in die Kammer 27 und verläßt diese Kammer durch die obere Durchlaßöffnung 12 und tritt dann nach einer nochmaligen Umlenkung um 180^{o} in die Kammer 28 ein, bevor das Wasser dann an der an der Kammer 28 vorgesehenen Anschlußöffnung 14 abfließen kann. Beim Durchströmen der Kammer 26 - 28, in denen die Fließrichtung des Wassers im wesentlichen in Ebenen senkrecht zur Symmetrieachse S verläuft, schneidet das Wasser die Magnetfeldlinien 25 des von der Magnetspule 19 erzeugten Magentfeldes senkrecht, womit eine optimale Behandlung des Wassers im Magnetfeld erreicht wird. Durch die Profilierung bzw. nutenförmigen Vertiefungen 16 - 18 der Umlenkplatte 10 wird einmal eine Konzentration der Magnetfeldlinien im Bereich der Ränder dieser Vertiefungen und damit dort eine besonders intensive Behandlung des Wassers im Magnetfeld erreicht. Andererseits sorgt diese Profilierung auch dafür, daß trotz der exzentrischen Anordnung der Durchlaßöffnung 12 sowie der Anschlußöffnung 14 in bezug auf die Symmetrieachse S eine möglichst gleichmäßige Verteilung des Wasserstromes über die gesamte, in Richtung senkrecht zur Mittellinie M, d.h. in Richtung senkrecht zur Zeichenebene der Fig. 1 verlaufende Breite der Kammern 27 und 28 erfolgt.

Da der Erfolg der Behandlung des Wassers mit der vorbeschriebenen Vorrichtung im wesentlichen auch von der Verweildauer des Wassers im Magnetfeld abhängt, ist die Vorrichtung so ausgebildet, daß die effektive Länge, auf der das Wasser zwischen der Anschlußöffnung 15 und der Anschlußöffnung 14 die Vorrichtung durchströmt, durch Verwendung einer entsprechend höheren Anzahl von Umlenkplatten 10 und 11 vergrößert werden kann. So ist es beispielsweise möglich, zusätzlich zu den beiden Umlenkplatten 10 und 11 noch eine weitere Umlenkplatte, beispielsweise eine profilierte Umlenkplatte 10 am Einlaß vorzusehen, so daß dann zwischen den beiden Gehäuseteilen 1 und 2 ausgehend von dem Gehäuseteil 1 eine Umlenkplatte 10, anschließend eine Umlenkplatte 11 und dann wiederum eine Umlenkplatte 10 vorgesehen sind, wobei durch entsprechende Anordnung der Gehäuseteile 1 und 2 sowie der Umlenkplatten 10 und 11 dafür gesorgt ist, daß nicht nur die Durchlaßöffnungen 12 und 13 zweier benachbarter Umlenkplatten in bezug auf die Symmetrieachse S um 180^{o} versetzt sind, sondern auch jede Anschlußöffnung 14 bzw. 15 gegenüber der Durchlaßöffnung 12 der benachbarten Umlenkplatte 10. Zusammen mit der weiteren Umlenkplatte, nämlich beispielsweise der Umlenkplatte 10 wird auch eine etwas breite Magnetspule 19 sowie ein etwas breiterer Dichtungsring 20 verwendet. Um das Gehäuse am Umfang zu schließen, ist zwischen den Gehäuseteilen 1 und 2 dann ein ringartiges Gehäuseteil eingesetzt, welches ebenso wie die ringartigen Ränder 8 und 9 die Magnetspule 19 umschließt und ebenfalls aus ferromagnetischem Material, bevorzugt aus dem vorgenannten ferritischen Material hergestellt ist. Bei einer entsprechend größeren Anzahl von Umlenkplatten 10 bzw. 11 können auch zwei oder mehr als zwei ringförmige Gehäuseteile zwischen den beiden äußeren Gehäuseteilen 1 und 2 vorgesehen sein.

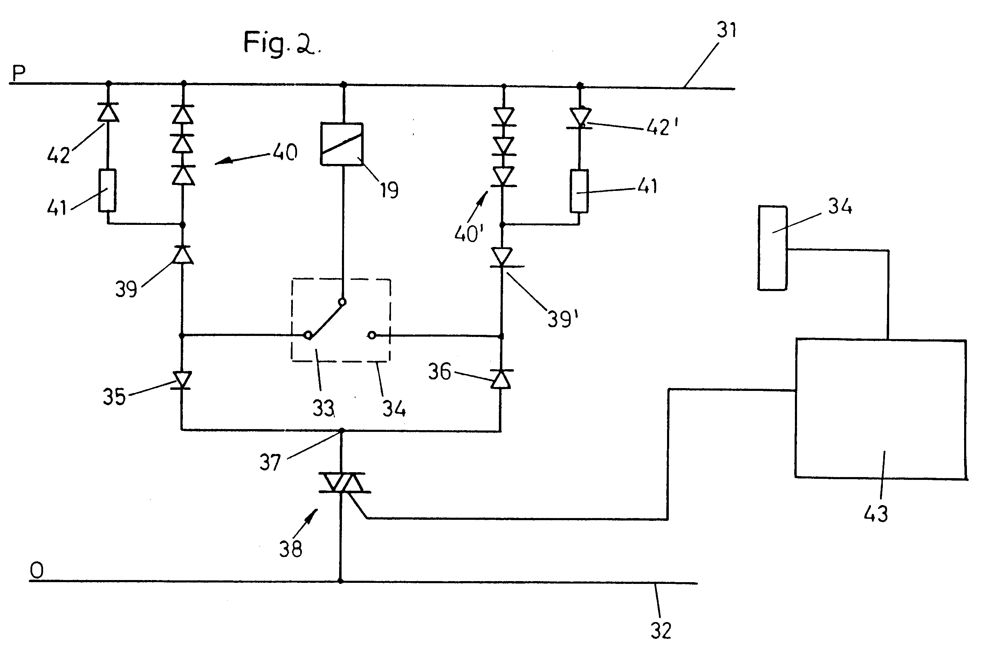

Die Ansteuerung der Magnetspule 19 ist in der Fig. 2 dargestellt. Die gleiche Ansteuerung wird auch verwendet, wenn anstelle nur einer einzigen Magnetspule 19 mehrere, in Serie oder parallel geschaltete Magnetspulen Verwendung finden.

Die Ansteuerung der Magnetspule 19 erfolgt bei der dargestellten Ausführungsform direkt mit einer Wechselspannung von 220 Volt (Netzspannung), die zwischen den Leitungen 31 und 32 anliegt. Dabei sind die Leitung 31 die Phase und die Leitung 32 der Null-Leiter des Wechselspannungs-Versorgungsnetzes. Mit ihrem einen Anschluß ist die Magnetspule 19 an die Leitung 31 angeschlossen. Der andere Anschluß der Magnetspule 19 ist über einen Umschalter 33, der beispielsweise von dem Umschaltkontakt eines Relais 34 gebildet ist, wahlweise über eine Diode 35 oder eine Diode 36 mit einem Schaltungspunkt 37 verbindbar, der über einen von einem Triac gebildeten elektronischen Schalter 38 mit der Leitung 32 verbunden ist. Die Dioden 35 und 36 sind unterschiedlich gepolt, so daß bei geschlossenem Schalter 38 in der in der Fig. 2 dargestellten Stellung des Umschaltelementes 33 entsprechend einer Einweggleichrichtung ein pulsierender Strom mit 100 Hz in der einen Richtung und bei in der anderen Stellung befindlichem Umschalter 33 über die Diode 36 in der anderen Richtung fließt. Zwischen der Diode 35 und der Leitung 33 sind in Serie eine Diode 39 sowie eine von der Serienschaltung dreier Dioden gebildete Diodenanordnung 40 vorgesehen, wobei die Diode 39 und die Diodenanordnung 40 zwar jeweils gleichsinnig, aber entgegen gesetzt zur Diode 35 gepolt sind, d.h. die Anode der Diode 39 ist mit der Anode der Diode 35 verbunden. Parallel zu der Diodenanordnung 40 liegt die Serienschaltung aus einem Widerstand 41 und einer Leuchtdiode 42. In gleicher Weise ist zwischen der Diode 36 und der Leitung 31 eine Diode 39' in Serie mit einer Diodenanordnung 40' und hierzu parallel eine Serienschaltung aus dem Widerstand 41' und der Leuchtdiode 42' vorgesehen, wobei die Dioden 39', 42' sowie die Diodenanordnung 40 identisch mit den Elementen 39, 40 und 42, jedoch umgekehrt gepolt sind, und zwar derart, daß die Kathode der Diode 39' mit der Kathode der Diode 36 verbunden ist. Mit Hilfe einer Steuereinrichtung 43 wird das Relais 34 und damit der Umschalter 33 so gesteuert, daß die Magnetspule 19 über einen längeren Zeitraum T bei in der in der Fig. 2 gezeigten Stellung befindlichem Umschalter 33 betrieben wird und für eine kürzere Zeitdauer t bei erregtem Relais 34 und damit bei in der Arbeitsstellung befindlichem Umschalter 33. Die größere Zeitdauer T beträgt dabei beispielsweise eine Minute und die kleinere Zeitdauer t etwa fünf Sekunden. Durch diese periodische Umpolung der Stromrichtung durch die Magnetspule 19 und damit verbunden durch die periodische Umpolung des Magnetfeldes wird erreicht, daß sich im zu behandelnden Wasser mitgeführte Partikel, die ein ferromagnetisches Material enthalten, sich nicht innerhalb der Vorrichtung an den dortigen Wänden sowie insbesondere im Bereich des Dichtungsringes 20 ablagern und dadurch das Magnetfeld "kurzschließen" können. Derartige Partikel werden vielmehr bei der Umkehr des Stromflusses durch die Magnetspule bzw. des Magnetfeldes abgestoßen und dann mit dem Wasser mitgeführt.

Wesentlich ist bei der in der Fig. 2 dargestellten Ansteuerung, daß auch der Schalter 38 von der Steuereinrichtung 43 betätigt wird, und zwar derart, daß der Schalter 38 vor jedem Umschalten die Verbindung zwischen dem Schaltungspunkt 37 und der Leitung 32 unterbricht und diese Verbindung erst wieder herstellt, wenn der Umschaltvorgang erfolgt ist. Am Ende und am Beginn jeder Periode T sowie t ist somit der Schalter 38 über eine vorgegebene Zeitdauer geöffnet, so daß am Beginn und am Ende jeder Zeitperiode T und t über eine vorgegebene Zeitspanne der Stromfluß durch die Magnetspule 19 vollständig unterbrochen ist. Dies hat den Vorteil, daß nach dem Öffnen des Schalters 38 und noch vor dem Umschalten die in der Magnetspule 19 gespeicherte magnetische Energie über die als Freilaufdioden wirkende Diode 39 und Diodenanordnung 40 abgebaut werden kann, wobei der an der Diodenanordnung 40 auftretende Spannungsabfall, der etwa der Summe der Schwellspannungen der diese Diodenanordnung bildenden Dioden entspricht, ein Aufleuchten der Leuchtdiode 42 bewirkt. Nach dem Abbau der magnetischen Energie der Magnetspule 19 erfolgt weiterhin bei geöffnetem Schalter 38 die Umschaltung mit Hilfe des Umschalters 33. Erst daran anschließend wird der Schalter 38 wieder geöffnet. Erfolgt bei in Arbeitsstellung befindlichem Umschalter 33 das Umschalten, so wird in gleicher Weise zunächst der Schalter 38 geöffnet, so daß die in der Magnetspule 19 enthaltene magnetische Energie über die als Freilaufdioden wirkende Diode 39' und die Diodenanordnung 40' abgebaut werden kann und hierbei die Leuchtdiode 42' aufleuchtet. Erst nach dem Abbau der magnetischen Energie der Magnetspule 19 erfolgt wiederum das Umschalten des Umschalters 33, d.h. durch Abschalten des Relais 34 gelangt dieser Umschalter wieder in seine Ruhestellung, im Anschluß daran wird der Schalter 38 geschlossen.

Die vorbeschriebene Ansteuerung der Magnetspule 19 ist von grundsätzlicher Bedeutung und kann bei allen Vorrichtungen zur magnetischen Behandlung von Wasser Verwendung finden, und zwar unabhängig von der mechanisch-konstruktiven Ausbildung der jeweiligen Vorrichtung.

Durch die Verwendung von mehreren Kammern 26 - 28 wird eine optimale Verweildauer des Wassers in der Vorrichtung erreicht. Die Fließgeschwindigkeit bewegt sich im Bereich zwischen 20 bis 5 Meter pro Sekunde. Bevorzugt beträgt die magnetische Feldstärke maximal bis 10 000 Gauß. Die erste Kammer 26 dient als Beruhigungszone, in der keine Verwirbelungen erfolgen sondern in konstantes Fließen gewährleistet ist. Der Kraftlinieneinfluß ist hier noch gering. Die Kammern 27 und 28 bilden die eigentlichen Behandlungszonen mit Kraftlinienkonzentration an den Kanten der Vertiefungen 16 -18.

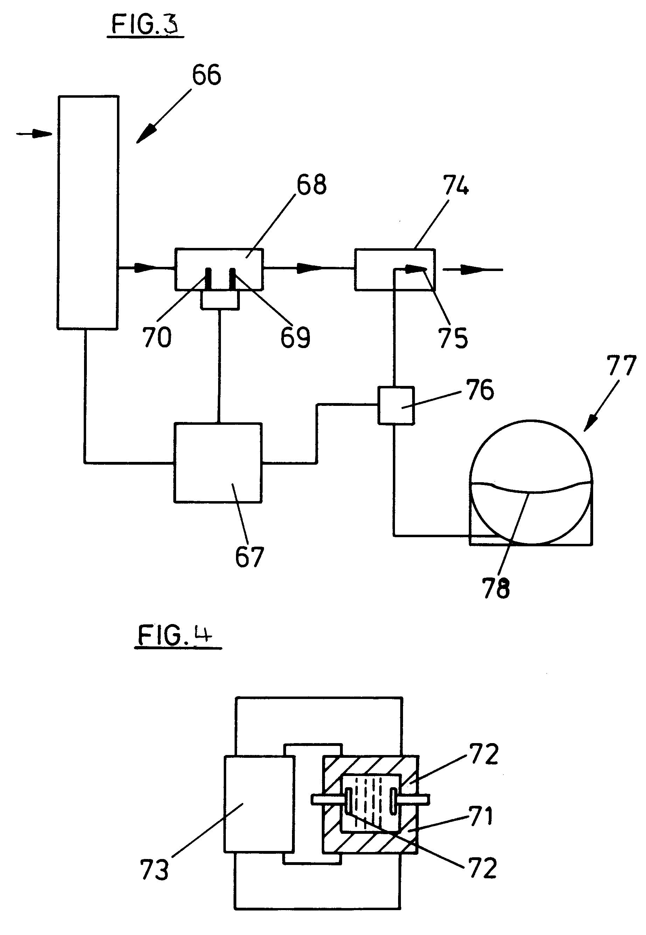

In der Fig. 3 ist mit 66 allgemein eine Vorrichtung zum Behandeln von Wasser bezeichnet, beispielsweise eine Vorrichtung in der Ausbildung der Fig. 1. Die Vorrichtung 66 wird entsprechend den Pfeilen A und B von dem Wasser durchströmt und dort von dem der Magnetspule 19 bzw. 61 erzeugten Magnetfeld behandelt. Zur Ansteuerung der Magnetspule dient eine Steuereinrichtung, die beispielsweise ähnlich der Ansteuereinrichtung 67 gemäß Fig. 2 ausgebildet oder zumindest eine gleiche oder ähnliche Funktion aufweist. Das aus der Vorrichtung 66 austretende Wasser durchströmt eine Meßeinrichtung 68, die ein von der Strömung des Wassers abhängiges elektrisches Signal an die Ansteuereinrichtung 67 liefert. Im einfachsten Fall ist die Meßeinrichtung 68 ein sog. Strömungswächter, der immer dann an die Ansteuereinrichtung 67 ein Signal liefert, wenn die Strömungsgeschwindigkeit des Wassers durch die Meßeinrichtung 68 gleich oder annähnern gleich Null ist oder aber einen vorgegebenen Wert unterschreitet. Derartige, insbesondere auch ohne bewegliche Elemente arbeitende Strömungswächter für Flüssigkeiten und insbesondere für Wasser sind an sich bekannt und arbeiten auf dem Prinzip, daß das Abführen der Wärme von einer erwärmten, in die Flüssigkeit bzw. das Wasser hineinreichenden Sonde 69 bei strömender Flüssigkeit größer ist als bei stehender Flüssigkeit. Mit Hilfe einer Vergleichssonde 70 kann dann aus dieser unterschiedlichen Wärmeabfuhr und der daraus resultierenden unterschiedlichen Temperatur der Meßsonde 69 bei strömendem Wasser bzw. bei stehendem Wasser das entsprechende Signal für die Steuereinrichtung 67 erzeugt werden.

Die Meßeinrichtung 68 kann aber auch so ausgebildet sein, daß mit ihr die Strömungsmenge des Wassers (Meßeinrichtung 68 je Zeiteinheit durchströmende Wassermenge) erfaßt und von ihr ein dieser Strömungsmenge entsprechendes Signal an die Ansteuereinrichtung 67 geliefert wird. In diesem Fall ist die Meßeinrichtung vorzugsweise als auf dem Induktionsprinzip arbeitender Durchflußmesser ausgebildet, d.h. entsprechend Fig. 4 sind in einem von der Meßeinrichtung 68 gebildeten und vom Wasser durchströmten Kanal 71 zwei Elektroden 72 vorgesehen, die sich senkrecht zur Längsrichtung des Kanales einander gegenüberliegen, und zwar in einer ersten Achsrichtung. Mit Hilfe einer Magnetspule 73 ist weiterhin ein Magnetfeld erzeugt, dessen Magnetlinien dem Kanal 71 in einer zweiten, senkrecht zur ersten sowie auch senkrecht zur Längsachse des Kanals verlaufenden Achsrichtung schneiden. Da das den Kanal 71 durchströmende Wasser leitend ist, wirkt dieses Wasser beim Durchströmen des Kanals 71 wie ein in einem Magnetfeld bewegter Leiter. Im fließenden Wasser zwischen den beiden Elektroden 72 und im Eingangskreis einer an diese Elektroden angeschlossener Auswerteinrichtung wird daher ein Strom erzeugt, dessen Größe abhängig ist von der Fließgeschwindigkeit des Wassers und damit von der den Kanal 71 durchströmenden Wassermenge.

Auf die Meßeinrichtung 68 in Strömungsrichtung des Wassers folgend ist eine Injektionseinrichtung 74 vorgesehen, die im wesentlichen von einem vom Wasser durchströmten Kanal mit wenigstens einer im Inneren dieses Kanals angeordneten Injektionsdüse 75 gebildet ist. Die Düse 75 der Injektionseinrichtung ist über eine mit einem Magnetventil 76 versehene Leitung mit einem Behälter 77 verbunden, der ein flüssiges Injektionsmedium, beispielsweise in Wasser oder in einem anderen Lösungsmittel gelösten Mineralien und/oder Spurenelemente usw. unter Druck enthält. Der Innenraum des Behälters 77 besteht aus zwei durch eine bewegliche Membran 78 voneiannder getrennten Kammern, von denen die eine Kammer mit einem gasförmigen Druckmedium (z.B. mit Stickstoff unter Druck) und die andere Kammer mit dem Injektionsmittel gefüllt ist. Durch diese Ausbildung ist es möglich, das Injektionsmittel völlig zu verbrauchen, ohne daß das Druckmedium aus dem Behälter 77 austritt. Der Behälter 77 ist austauschbar derart vorgesehen, daß ein verbrauchter Behälter 77 auch von einem ungeübten Laien von der mit dem Magnetventil 76 versehenen Leitung abgetrennt und ein neuer, gefüllter Behälter 77 an diese Leitung angeschlossen werden kann. Das Magnetventil 76 ist normalerweise geschlossen und wird durch ein Steuersignal der Ansteuereinrichtung 67 geöffnet.

Die Ansteuereinrichtung 67 sorgt zunächst in Verbindung mit der Meßeinrichtung 68 dafür, daß dann, wenn kein Wasser durch die Vorrichtung 66 fließt, die Ansteuerung der in der Vorrichtung 66 vorgesehene Magnetspule unterbrochen wird. Bei der in der Fig. 2 dargestellten Ansteuerschaltung kann dies beispielsweise durch entsprechende Ansteuerung der Steuereinrichtung 43 von der Meßeinrichtung 68 erfolgen, und zwar derart, daß die Steuereinrichtung 43 den Schalter 38 nicht einschaltet, d.h. den diesen Schalter bildenden Triac nicht zündet. Hierdurch wird eine Überhitzung der Magnetspule der Vorrichtung 66 bei fehlendem Wasserfluß, d.h. bei fehlender Kühlung durch das fließende Wasser vermieden. Selbstverständlich kann die Steuerung der Magnetspule durch die Ansteuereinrichtung 67 in Abhängigkeit vom Signal der Meßeinrichtung 68 auch in anderer Weise erfolgen, beispielsweise so, daß ein Abschalter der Ansteuerung der Magnetspule der Vorrichtung 66 dann erfolgt, wenn über eine vorgegebene Zeitperiode kein fließendes Wasser bzw. keine einen vorgegebenen Schwellwert überschreitende Fließgeschwindigkeit oder Flußmenge für das Wasser festgestellt werden.

Die Ansteuereinrichtung 67 steuert weiterhin das Magnetventil 76 und damit die Injektion des Injektionsmittels. Die Injektion des Injektionsmittels erfolgt vorzugsweise getaktet, d.h. es wird jeweils eine gewisse Menge an Injektionsmittel nach einer vorgegebenen Zeitperiode injiziert, wofür dann das Magnetventil 76 nach vorgegebenen Zeitperioden jeweils für eine vorgegebene Zeitdauer geöffnet und anschließend wieder geschlossen wird. Das Injizieren des Injektionsmittels erfolgt dabei auch in Abhängigkeit von dem von der Meßeinrichtung 68 gelieferten Signal, d.h. das Injizieren des Injektionsmittels wird beispielsweise dann unterbrochen, wenn keine Wasserströmung vorliegt oder die Strömungsgeschwindigkeit bzw. Strömungsmenge unter einem vorgegebenen Schwellwert liegt. Ist die Meßeinrichtung ein Durchflußmengenmesser, so erfolgt bevorzugt mit dem von dieser Meßeinrichtung 68 gelieferten Signal eine von dem Wasserdurchfluß abhängige Dosierung mit dem Injektionsmittel, und zwar beispielsweise dadurch, daß die Zeitdauer der Öffnung des Magnetventils in Abhängigkeit von der Durchflußmenge verlängert und/oder die Zeitperioden, während der das Magnetventil 76 geschlossen ist, umgekehrt proportional zur Durchflußmenge verändert werden.

In den Fig. 3 und 4 wurde davon ausgegangen, daß sich die Meßeinrichtung 68 und die Injektionseinrichtung 74 an den Auslaß der Vorrichtung 66 anschließen. Selbstverständlich ist es auch möglich, diese Elemente in Strömungsrichtung des Wassers vor dem Einlaß der Vorrichtung 66 vorzusehen. Weiterhin ist es auch möglich, die Meßeinrichtung 68 sowie die Injektionseinrichtung 74 in die Vorrichtung 66 zu integrieren, wobei es dann speziell auch möglich ist, das von der Magnetspule 19 bzw. 61 erzeugte Magnetfeld für die vorstehend insbesondere im Zusammenhang mit der Fig. 4 beschriebene induktive Durchflußmengenmessung zu verwenden. Hierfür sind dann beispielsweise an den einander gegenüberliegenden Flächen zweier benachbarter Umlenkplatten, beispielsweise der Umlenkplatten 51 und 52 Elektroden 72' elektrisch isoliert vorgesehen, und zwar derart, daß die beiden Elektroden voneinander beabstandet sind.

## Patentansprüche

1. Vorrichtung zur Beseitigung von Kesselstein bzw. zum Verhüten der Bildung von Kesselstein in von einer Flüssigkeit, z.B. Wasser durchströmten Rohrsystemen, wobei die Flüssigkeit dem Magnetfeld wenigstens einer eine Gehäuseachse (S) umschließenden Magnetspule (19, 61) ausgesetzt wird, mit einem in einem Gehäuse (1, 2; 45, 46) gebildeten Innenraum, der durch wenigstens eine Umlenkplatte (10, 11; 51 - 53) in wenigstens zwei Kammern unterteilt ist, nämlich in eine erste, mit einer Einlaßöffnung (15) versehene Kammer (26, 57) und in eine zweite, mit einer Auslaßöffnung (14) versehene Kammer (28, 54), wobei die beiden Kammern (26, 28; 54, 57) durch einen im Innenraum des Gehäuses (1, 2; 45, 46) ausgebildeten, mehrfach abgewickelten Strömungsweg in Verbindung stehen, sowie mit einem Versorgungsstromkreis für die wenigstens eine Magnetspule (19, 61), der eine von einer Steuereinrichtung (43; 67) angesteuerten Schalteinrichtung (33, 34, 38) zur Ansteuerung der wenigstens einen Magnetspule (19, 61) mit einem sich in seiner Polarität periodisch ändernden Gleitstrom aufweist, welcher die Magnetspule (19, 61) in einem ersten Betriebszustand der Schalteinrichtung (33, 34, 38) in einem ersten, vorzugsweise größeren Zeitintervall (T) in einer ersten Richtung und in einem zweiten Betriebszustand der Schalteinrichtung (33, 34, 38) in einem zweiten, vorzugsweise kleineren Zeitintervall (t) in einer zweiten umgekehrten Richtung durchfließt, dadurch gekennzeichnet, daß die Schalteinrichtung (33, 34, 38) wenigstens einen dritten Betriebszustand aufweist, in welchem der Stromfluß durch die wenigstens eine Magnetspule (19, 61) unterbrochen ist, und daß die Schalteinrichtung (33, 34, 38) diesen dritten Betriebszustand jeweils zwischen einem ersten und einem zweiten bzw. zwischen einem zweiten und einem ersten Betriebszustand einnimmt.

2. Vorrichtung nach Anspruch 1, dadurch gekennzeichnet, daß zusätzlich zu der wenigstens einen Magnetspule (19, 61) wenigstens ein Dioden (39, 40; 39', 40') und/oder Widerstände aufweisender Dämpfungsstromkreis vorgesehen ist, der in dem dritten Betriebszustand der Schalteinrichtung (33, 34, 38) parallel zu der wenigstens einen Magnetspule (19, 61) zum Abbau der magnetischen Energie der wenigstens einen Magnetspule (19, 61) liegt, wobei bevorzugt parallel zu einem vorzugsweise von einer Diodenanordnung (40, 40') gebildeten Teil des Dämpfungsstromkreises ein eine Leuchtdiode (42, 42') aufweisender Anzeigestromkreis vorgesehen ist.

3. Vorrichtung nach Anspruch 1 oder 2, dadurch gekennzeichnet, daß die Schalteinrichtung von einer von der Steuereinrichtung (43) angesteuerten Umschalteinrichtung (33, 34) gebildet ist, die in einer ersten Position die wenigstens eine Magnetspule (19, 61) mit dem Versorgungsstromkreis für einen Stromfluß in der einen Richtung und in einer zweiten Stellung die wenigstens eine Magnetspule (19, 61) mit dem Versorgungsstromkreis für einen Stromfluß in der anderen, entgegen gesetzten Richtung verbindet, und daß im Versorgungsstromkreis in Serie mit der Umschalteinrichtung (33, 34) ein von der Steuereinrichtung (43) ebenfalls angesteuerter Schalter (38) vorgesehen ist.

4. Vorrichtung nach Anspruch 3, dadurch gekennzeichnet, daß die Umschalteinrichtung (33, 34) sowie der Schalter (38) von der Steuereinrichtung (43) derart angesteuert werden, daß das Umschalten der Umschalteinrichtung (33, 34) jeweils bei geöffnetem Schalter (38) erfolgt.

5. Vorrichtung nach Anspruch 3 oder 4, dadurch gekennzeichnet, daß das Umschalten der Umschalteinrichtung (33, 34) jeweils mit einer vorgegebenen zeitlichen Verzögerung auf das Öffnen des Schalters (38) sowie das Einschalten dieses Schalters (38) mit einer vorgegebenen zeitlichen Verzögerung nach jeweils erfolgtem Umschalten der Umschalteinrichtung (33, 34) erfolgt, wobei die jeweilige zeitliche Verzögerung vorzugsweise kleiner ist als die Zeitdauer des ersten und/oder zweiten Zeitintervalls (T, t).

6. Vorrichtung nach einem der Ansprüche 1 bis 5, dadurch gekennzeichnet, daß das Gehäuse (1, 2; 45, 46), die Umlenkplatten (10, 11; 51 - 53) sowie der wenigstens eine zusätzliche Gehäuseteil (29, 30) aus ferromagnetischem Material, vorzugsweise aus ferritischem Material bzw. Eisen hergestellt sind.

7. Vorrichtung nach einem der Ansprüche 1 bis 6, gekennzeichnet durch eine Strömungsmeßeinrichtung (68), die ein Signal liefert, welches von der die Vorrichtung durchströmenden Wassermenge und/oder von der Geschwindigkeit des die Vorrichtung durchströmenden Wassers abhängig ist, und daß Mittel (67) vorgesehen sind, um die Magnetspule (19, 61) in Abhängigkeit von diesem Signal zu steuern.

8. Vorrichtung nach Anspruch 7, dadurch gekennzeichnet, daß die Mittel zum Steuern der Magnetspule (19, 61) den Stromfluß durch die Magnetspule (19, 61) unterbrechen, wenn die Strömungsgeschwindigkeit oder Strömungsmenge des Wassers Null ist oder einen vorgegebenen Wert unterschreitet.

9. Vorrichtung nach Anspruch 7 oder 8, dadurch gekennzeichent, daß die Meßeinrichtung (68) ein Strömungswächter oder ein Durchflußmengenmesser, bevorzugt ein induktiv arbeitender Durchflußmengenmesser ist.

10. Vorrichtung nach einem der Ansprüche 1 bis 9, gekennzeichnet durch Mittel (74, 75, 76, 77) zum Injizieren eines flüssigen Injektionsmittels in das die Vorrichtung (66) durchströmende Wasser,
wobei vorzugsweise die Mittel zum Injizieren eine Injektionsdüse (75) aufweisen, welche über ein steuerbares Ventil (76) mit einer Quelle (77) für das unter Druck stehende Injektionsmittel verbunden ist, und das Ventil von einer Steuereinrichtung (67) vorzugsweise in Abhängigkeit von dem Signal der Meßeinrichtung (68) gesteuert wird,
und/oder wobei vorzugsweise die Quelle für das unter Druck stehende Injektionsmittel ein Druckbehälter (77) ist, dessen Innenraum durch eine bewegliche oder flexible Wand (78) in eine das Injektionsmittel aufnehmende Kammer und in eine mit einem Druckmedium, vorzugsweise mit einem gasförmigen Druckmedium beaufschlagte Kammer unterteilt ist.

## Claims

1. A device for the removal of scale or the prevention of the formation of scale in a pipe system with a through-flowing liquid, e.g. water, whereby the liquid is subjected to the magnetic field of at least a magnetic coil (19, 61) enclosing the axis (S) of a housing, with an inner space formed in the housing (1, 2; 45, 46) which is divided into at least two chambers through at least one baffle (10, 11; 51-53), namely into a first chamber (26, 57) provided with an inlet (15) and into a second chamber (28, 54) provided with an outlet (14) whereby both chambers (26, 28; 54, 57) remain in connection through a multiply angled flow path formed in the inner space of the housing (1, 2; 45, 46), as well as with a supply circuit for the at least one magnetic coil (19, 61) having a switch device (33, 34, 38) triggered by a control device (43, 67) to drive the at least one magnetic coil (19, 61) with a current periodically alternating in polarity which the magnetic coil (19, 61) passes in a first mode of the switch device (33, 34, 38) in a first preferably larger time interval (T) in a first direction and in a second mode of the switch device (33, 34, 38) in a second preferably smaller time interval (t) in a second reversed direction, characterised in that the switch device (33, 34, 38) has at least a third mode in which the current flow is intermittent through the at least one magnetic coil (19, 61) and that the switch device (33, 34, 38) occupies this third mode at any time between a first and a second, or between a second and a first mode.

2. A device according to claim 1 characterised in that in addition to the at least one magnetic coil (19, 61) at least a diode (39, 40; 39', 40') and/or a resistance displaying damping circuit is provided being parallel to the at least one magnetic coil (19, 61) in the third mode of the switch device (33, 34, 38) for the discharge of magnetic energy of the at least one magnetic coil (19, 61) whereby preferably parallel to a part of the damping circuit preferably constructed from a diode arrangement (40, 40') a display circuit having a light emitting diode (42, 42') is provided.

3. A device according to claim 1 or 2 characterised in that the switch device is formed from a switch over device (33, 34) triggered from a control device (43) connected in a first position to the at least one magnetic coil (19, 61) with the supply circuit providing a current flow in one direction and connected in a second position to the at least one magnetic coil (19, 61) with the supply circuit providing a current flow in the other oppositely set direction and that in the supply circuit in series with the switch over device (33, 34) a switch device (38), likewise triggered from the control device, is provided.

4. A device according to claim 3 characterised in that the switch over device (33, 34) as well as the switch (38) are so triggered by the control device (43) that the switch over of the switch over device (33, 34) takes place each time by opened switch (38).

5. A device according to claim 3 or 4 characterised in that the switch over of the switch over device (33, 34) takes place each time with a given time delay on the opening of the switch (38) as well as the switching on of the switch (38) with a given time delay after each switching over of the switch over device (33, 34) occurred, whereby the respective time delay is preferably smaller than the duration of the first and/or second time intervals (T, t).

6. A device according to one of claims 1 to 5, characterised in that the housing (1, 2; 45, 46), the baffles (10, 11; 51-53) as well as at least an additional housing part (29, 30) are manufactured out of ferromagnetic material, preferably out of ferrous material or iron.

7. A device according to one of claims 1 to 6 characterised by a flow meter device (68) which delivers a signal which depends upon the volume of water flowing through the device, and/or on the velocity of the water flowing through the device and that means (67) are provided in order to control the magnetic coil (19, 61) in response to this signal.

8. A device according to claim 7 characterised in that the means to control the magnetic coil (19, 61) interrupts the current flow through the magnetic coil (19, 61) if the flow speed or flow volume of the water is zero or lower than a given value.

9. A device according to claim 7 or 8 characterised in that the measuring device (68) is a flow monitor or a through flow monitor, preferably an inductively operating through flow meter.

10. A device according to one of claims 1 to 9 characterised by means (74, 75, 76, 77) for the injection of a liquid medium into the water flowing through the device (66) whereby preferably the injection means have an injection nozzle (75) which is connected via a controllable valve (76) with a source (77) for the pressurised injection medium and the valve is controlled by a control device (67) preferably dependently upon the signal of the measuring device (68) and/or whereby preferably, the source of the pressurised injection medium is a pressure vessel (77), the inner space of which is divided by means of a movable or flexible wall (78) into a chamber containing the injection medium and a chamber containing a pressure medium, preferably a gaseous pressure medium.

## Revendications

1. Appareil permettant d'éliminer le tartre ou de prévenir la formation de tartre dans des systèmes de tuyaux traversés par un liquide, par exemple par de l'eau, le liquide étant soumis au champ magnétique d'au moins une bobine excitatrice (19, 61) entourant un axe de boîtier (S), dispositif comprenant une cavité, formée dans un boîtier (1, 2 ; 45, 46) et divisée par au moins une plaque de déviation (10, 11; 51-53) en au moins deux chambres, à savoir une première chambre (26, 57) pourvue d'un orifice d'entrée (15) et une seconde chambre (28, 54) pourvue d'un orifice de sortie (14), les deux chambres (26, 28 ; 54, 57) communiquant par un trajet d'écoulement formé dans la cavité du boîtier (1, 2 ; 45, 46) et plusieurs fois coudé, et un circuit d'alimentation en courant de la ou des bobines excitatrices (19, 61) qui comprend un dispositif de commutation (33, 34, 38) commandé par un dispositif de commande (43 ; 67) et servant à appliquer à la ou aux bobines excitatrices (19, 61) un courant continu dont la polarité change d'une manière périodique et qui, dans un premier état de fonctionnement du dispositif de commutation (33, 34, 38), traverse la bobine excitatrice (19, 61) dans un premier sens pendant un premier intervalle de temps (T), de préférence plus grand, et, dans un deuxième état de fonctionnement du dispositif de commutation (33, 34, 38), la traverse dans un second sens, opposé, pendant un second intervalle de temps (t), de préférence plus petit, caractérisé en ce que le dispositif de commutation (33, 34, 38) comporte au moins un troisième état de fonctionnement dans lequel le flux de courant dans la ou les bobines excitatrices (19, 61) est interrompu et en ce que le dispositif de commutation (33, 34, 38) occupe ce troisième état de fonctionnement respectivement à chaque passage d'un premier à un deuxième état de fonctionnement et à chaque passage d'un deuxième à un premier état de fonctionnement.

2. Appareil selon la revendication 1, caractérisé en ce qu'en sus de la ou des bobines excitatrices (19, 61), il est prévu au moins un circuit d'amortissement qui comporte des diodes (39, 40 ; 39', 40') et/ou des résistances et qui, dans le troisième état de fonctionnement du dispositif de commutation (33, 34, 38), est placé en parallèle à la ou aux bobines excitatrices (19, 61) en vue d'annuler l'énergie magnétique de la ou des bobines excitatrices (19, 61), tandis que, de préférence en parallèle à une partie du circuit d'amortissement qui est de préférence formée d'un agencement de diodes (40, 40'), il est prévu un circuit de visualisation comportant une diode électroluminescente (42, 42').

3. Appareil selon la revendication 1 ou 2, caractérisé en ce que le dispositif de commutation est formé d'un dispositif de changement de position (33, 34) qui est commandé par le dispositif de commande (43) et qui, dans une première position, relie la ou les bobines excitatrices (19, 61) au circuit d'alimentation en courant de façon à établir un flux de courant dans un premier sens et, dans une seconde position, relie la ou les bobines excitatrices (19, 61) au circuit d'alimentation en courant de façon à établir un flux de courant dans l'autre sens, opposé, et en ce que, dans le circuit d'alimentation en courant et en série avec le dispositif de changement de position (33, 34), il est prévu un interrupteur (38) agencé de façon à pouvoir aussi être commandé par le dispositif de commande (43).

4. Appareil selon la revendication 3, caractérisé en ce que le dispositif de changement de position (33, 34) et l'interrupteur (38) sont commandés par le dispositif de commande (43) d'une façon telle que le changement de position du dispositif de changement de position (33, 34) a lieu à chaque ouverture de l'interrupteur (38).

5. Appareil selon la revendication 3 ou 4, caractérisé en ce que le changement de position du dispositif de changement de position (33, 34) a lieu, avec un retard préfixé, à chaque ouverture de l'interrupteur (38), ainsi qu'à chaque fermeture de cet interrupteur (38) avec un retard préfixé à la suite de chaque changement de position du dispositif de changement de position (33, 34) qui a eu lieu, chaque retard considéré étant de préférence inférieur à la durée du premier et/ou du second intervalles de temps (T, t).

6. Appareil selon l'une des revendications 1 à 5, caractérisé en ce que le boîtier (1, 2 ; 45, 46), les plaques de déviation (10, 11; 51-53) et la ou les parties supplémentaires de boîtier (29, 30) sont réalisés en une matière ferromagnétique, de préférence en une matière ferritique ou en fer.

7. Appareil selon l'une des revendications 1 à 6, caractérisé par un dispositif de mesure 'écoulement (68) qui délivre un signal qui dépend du débit d'eau traversant le dispositif et/ou de la vitesse de l'eau traversant le dispositif et en ce que des moyens (67) sont prévus pour commander la bobine excitatrice (19,61) en fonction de ce signal.

8. Appareil selon la revendication 7, caractérisé en ce que les moyens de commande de la bobine excitatrice (19, 61) interrompent le flux de courant dans la bobine excitatrice (19, 61) lorsque la vitesse d'écoulement ou le débit d'écoulement de l'eau est nul ou franchit vers le bas une valeur préfixée.

9. Appareil selon la revendication 7 ou 8, caractérisé en ce que le dispositif de mesure (68) est un dispositif de surveillance d'écoulement ou un débitmètre, de préférence un débitmètre à fonctionnement de type inductif.

10. Appareil selon l'une des revendications 1 à 9, caractérisé par des moyens (74, 75, 76, 77) servant à injecter un agent d'injection liquide dans l'eau traversant le dispositif (66), les moyens d'injection comprenant de préférence une buse d'injection (75) qui est reliée, par l'intermédiaire d'une valve (76) agencée de façon à pouvoir être commandée, à une source (77) prévue pour l'agent d'injection, lequel se trouve sous pression, et la valve est commandée par un dispositif de commande (67), de préférence en fonction du signal du dispositif de mesure (68), et/ou de préférence la source d'agent d'injection sous pression est un réservoir sous pression (77) dont la cavité est divisée par une paroi (78) mobile ou flexible en une chambre servant à contenir l'agent d'injection et une chambre soumise à l'action d'un agent sous pression, de préférence un agent sous pression gazeux.
